# EUROPEAN PATENT APPLICATION

(11) **EP 2 735 423 A1**
(43) Date of publication of application: **28.05.2014**
(21) Application number: 13194601.4
(22) Date of filing: 27.11.2013
(51) Int. Cl.: B29C 45/44

(54) **Device for demoulding pieces**

(30) Priority: 27.11.2012 ES 201231828
(71) Applicant: Comercial de Utiles y Moldes, S.A., 08960 Sant Just Desvern, Barcelona (ES)
(72) Inventor: Navarra Pruna, Alberto, 08960 SANT JUST DESVERN (Barcelona) (ES)
(74) Representative: Carpintero Lopez, Francisco

(57) **Abstract**

The device for demoulding pieces in a mould comprises a skid (1) comprising a slider (8) for housing a figure insert (2) for moulding of a negative (10) of the piece to be moulded, said slider being associated with a pushrod (9) that can move said slider (8) to an ejection position of a piece to be moulded pushing at least one ejection plate (11), and it is characterized in that said pushrod (9) is placed substantially perpendicular with respect to said at least one ejection plate (11).

Thanks to this substantially vertical arrangement of the pushrod the construction of the mould is simplified, minimizing the width needed for placing the device of the present invention inside the mould.

## Description

The present invention refers to a device for demoulding pieces, which houses a figure insert that forms the negatives in injection moulds. It is a device intended to replace the current inclined skids.

The main purpose of this device is to make the production costs cheaper, to simplify the whole production process, to minimize the dimensions and to ensure that all demoulding movements are done in the perpendicular direction of the mould, eliminating the angular displacements and costly machining.

### Background of the invention

Currently in the field of injection moulds, especially those of considerable size (i.e. moulds for the automotive industry, or the like) and for obtaining moulded pieces of plastic material, whose configuration has negative zones which cannot be moulded by conventional extraction systems, it is required the use of angular displacement skids associated with the mould, so that the demoulding of these negative pieces is facilitated during the extraction process.

Normally, and depending on the negative to be moulded, the path of these skids need not be the same as the path of the ejectors demoulding the corresponding piece. For this reason, most of these moulds require the use of a double set of ejection plates.

These ejection plates use the same shifting movement for both groups of ejection plates, but by duly incorporated mechanisms, we obtain after some movement, the first group of ejection plates remain stationary, while the second group is moving to the travel limit necessary for the complete removal of the moulded piece.

The first group of ejection plates normally incorporates all the mechanisms of angular movement, while the second group of ejection plates includes all the ejectors that permit the complete removal of the corresponding moulded product. This system, which is mainly caused by the effort required to drive one or more demoulding angular elements, requires suitably dimensioned ejection plates.

As they are mechanisms of angular displacement, the space required for their installation in many cases makes necessary to look for more or less burdensome alternatives due to the space needed to reinforce the efforts required in each case. Consequently, larger overall dimensions of the mould are required, with corresponding costs of material and machining hours. Also, in many cases an injection machine with larger capacity is needed, only by the dimensions of the mould, not for the weight of the piece.

All this greatly increases the cost of the mould, and often also the machines that enable its machining, that must be properly suited to these needs.

As they are large moulds, usually these negative parts also occupy a major part of the figure to the moulded, and in these cases the addition of cooling elements is essential to accelerate the cooling of the injection moulded mass of molten plastic.

Therefore, the piece, to be demoulded, must be cooled before its removal process, because at the time of injection the material enters in the mould cavity in a semimolten state, and to be ejected through the ejector, the material must of be cold and rigid.

The cooling process in the plastic moulds is achieved by means of internal circuits that are machined into the mould, through which cold water circulates, thereby achieving a thermal jump speeding up the hardening of the moulded piece.

Therefore, the main object of the present invention is to provide a moulding device which permits the demoulding of said inner negative parts, or internal protrusions, in large moulds in a simplified way, also simplifying the structure of the mould.

Another object of the present invention is to provide a moulding device and a large mould which allows the cooling of the piece to be demoulded in a simple way, when necessary, thereby reducing the time required for demoulding the piece.

### Disclosure of invention

With the device for demoulding of parts of the invention said disadvantages can be solved, presenting other advantages that will be described below.

The device for demoulding pieces in a mould comprises a skid comprising a slider for housing a figure insert for moulding of a negative of the piece to be moulded, said slider being associated with a pushrod that can move said slider to an ejection position of a piece to be moulded pushing at least one ejection plate, and it is characterized in that said pushrod is placed substantially perpendicular with respect to said at least one ejection plate.

Thanks to this substantially vertical arrangement of the pushrod the construction of the mould is simplified, minimizing the width needed for placing the device of the present invention inside the mould.

Advantageously, said slider performs a double movement, a vertical movement by the movement of said at least one ejection plate, and a transverse movement by an inclined guide of a sliding base.

The device for demoulding pieces according to the present invention comprises advantageously a single set of ejection plates provided with a stroke limiter of said set of ejection plates.

Advantageously, said limiter comprises an associated support ring.

The device for demoulding pieces according to the present invention also comprises advantageously means for cooling said figure insert.

According to a preferred embodiment, said means for cooling said insert comprises at least one tube for a cooling fluid, which extends from an inlet of cooling fluid and said insert.

Said cooling means comprises advantageously a connection in said insert for connecting said tube, which is advantageously flexible.

According to a preferred embodiment, said cooling means also comprises two ducts of different diameters sliding one inside the other, said tube being housed inside the smaller diameter duct.

### Brief Description of the Drawings

For a better understanding of what has been disclosed, some drawings are attached in which, schematically and only as a non-limiting example, a practical case of embodiment is shown.
Fig. 1 is a schematic elevation view of the top of the device for demoulding pieces of the present invention in the closed position of the mould;
Fig. 2 is a schematic elevation view of the top of the device for demoulding pieces of the present invention in the open position of the mould;

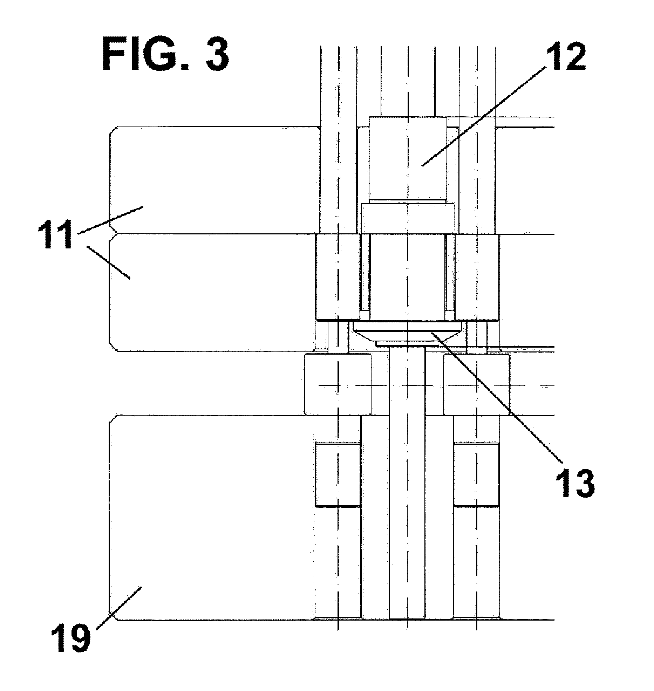

Fig. 3 is a schematic elevation view of the cooling means of the device for demoulding pieces of the present invention; and

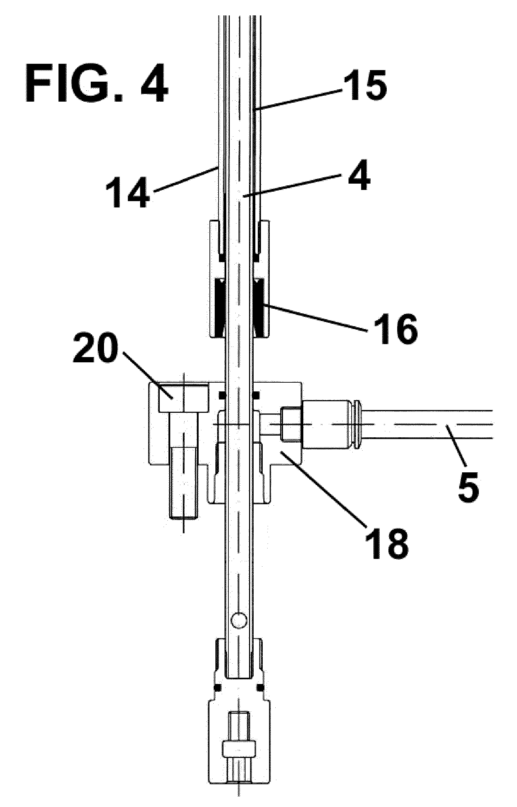

Fig. 4 is a schematic elevation view of the set of ejection plates and the stroke limiter of the device for demoulding pieces of the present invention.

### Description of a Preferred Embodiment

Firstly, it should be noted that the device for demoulding pieces of the present invention is designed to be used with large moulds, e.g. moulds over 800 kg., as they could be, without any limitation, for automotive panels, doors or roofs for automobiles, large appliances, etc. where internal negatives are necessary.

Said device for demoulding pieces of the present invention comprises a skid 1 provided at its top with a base 3 on which a slider 8 slides. Said base 3 is attached to the mould by means of fixation screws.

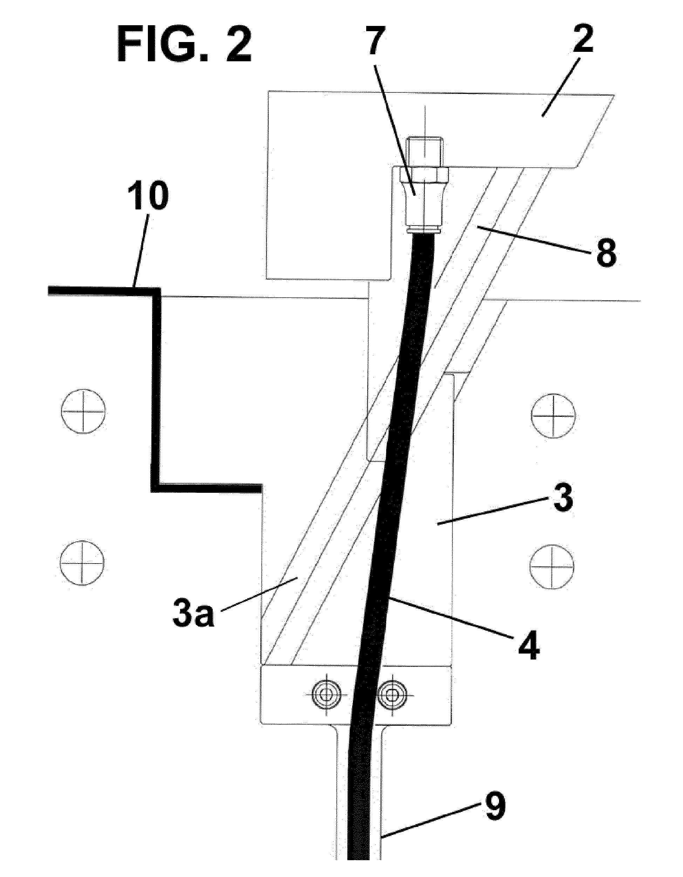

Said device also comprises an insert of Fig. 2 detachably secured on said slider, whose insert 2 is which moulds said negative or protrusion 10 in the desired shape. Evidently, said insert 2 can be removed and a different insert can be placed for moulding a piece with a different internal protrusion.

Said insert 2 is the element in which the shape of the negative to be reproduced is mechanized on the plastic piece. This insert 2, as opposed to the known one, is installed on the skid 1. The figure insert is completely defined in each case by a block joined in the slider 8, and assembled with it by two guiding sleeves, through which and by two screws, they are completely bonded, forming a single block. This insert 2 is suitable for incorporating the cooling circuit most suitable to its geometry, for optimizing the cooling rate of the piece to be moulded. Each insert incorporates a quick plug standard sleeve 7, where the cooling circuits can be connected, one for the input and one for the output, which in turn will be connected to each of the corresponding cooling circuits.

It should be noted that in small moulds known in the art of moulding, the inserts are attached laterally to the slider, i.e. the insert is placed adjacent to the skid and not on it. To permit the identification of the mould as large by a skilled person, in the present description it is indicated that the insert is placed or fixed on the skid.

Said insert 2 is detachably attached to the slider 8 of said skid 1, e.g. by screws or pins, so that the insert 2 can be easily attached and removed.

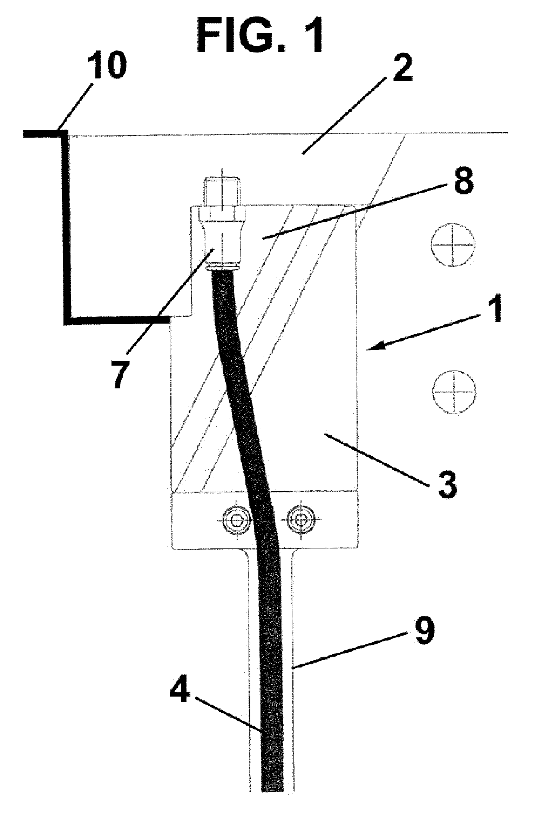

The skid 1 of the device of the present invention also comprises a pushrod 9 substantially vertically placed in the mould, unlike inclined pushrods of said conventional large moulds. Said pushrod 9 moves said insert 2 between a closed position (Fig. 1) and an open or ejection position (Fig. 2) of the mould.

The device of the present invention permits to eliminate a set of pressure plates, so that the mold may comprise just one set of ejection plates 11. The possibility of eliminating this set of plates is achieved by the use of a stroke limiter 12, which allows stop the stroke of the skid 1 and allows the ejectors that are in the same set of ejection plates to be moved along the same stroke, which is longer than that of the skid 1 which is connected to the limiter 12, allowing a dual stroke with a single set of plates and, therefore, making it unnecessary to have two sets of ejection plates, with all the cost and space savings involved.

The limiter 12 that is used in the device of the present invention is described in the patent application ES 2333566 A1, which is incorporated herein by reference.

The device of the present invention can also optionally comprise cooling means, which are added to the insert 2 and that permit to increase the cycle of the mould (and thus productivity) because the injected plastic can be cooled more quickly, thus allowing the ejection of the piece more quickly than if it is not cooled.

This has a major importance as larger is the negative to be made. The cooling system is designed so that all movements of the skid 1 are followed by pipes 4 which form the cooling circuit, and in each case one cooling inlet and one cooling outlet are necessary for each insert 2.

The cooling pipes 4 are moved perpendicular to the plates of the mould and should be moved with the movement itself during the ejection process. The skid 1, in the first vertical movement of the ejection plates 11, is moved along a stroke predetermined and controlled by the stroke limiter, and also the pipes of the cooling circuit must be controlled by the same stroke limiter, since the insert 2 incorporates itself cooling means, thus forming a single movable unit. The rest of the ejectors continue the whole movement of the ejection stroke, until the injected piece is completely demoulded.

Said cooling means or cooling circuit comprises ducts 14, 15 which are designed so that all movements of the insert 1 are followed by these ducts 15 forming the refrigeration circuit.

Thus, also the cooling ducts 14, 15 move along a movement perpendicular to the ejection plate or plates 11 of the mould and they also move with the movement itself during the ejection process.

As the skid 1, in the first vertical movement of the ejection plate or plates 11, moves along a stroke predetermined and controlled by a limiter, also the ducts 5 of the cooling circuit must be controlled by the same limiter, because the insert 2 itself incorporates said cooling means, thus forming a single movable unit.

These two ducts 14, 15, for example made of stainless steel, have different diameters, in order to slide one inside the other and having between them a set of sliding seals 16 and to prevent water or cooling fluid flowing inside the smaller diameter duct 15 to pass into the larger diameter duct 14, having leaks of water during the linear sliding movement.

In each insert 2 a suitable cooling circuit must be machined, and at the beginning and at the end of said circuit a fast connection sleeves 7 are incorporated, through which the flexible tubes 4 of a given length are connected, which in turn will be connected to cooling systems, one for the cooling water inlet and the other for the outlet.

During the demoulding movement, the insert 2 fitted on the slider 8 of the skid 1 performs a double movement, a vertical movement through the movement of the ejection plate 11, and a transverse movement through the inclined guide of the sliding base 3. Therefore, said sleeves 7 connected to the insert 2 also follow this double movement, and for this reason between the insert 2 and the cooling circuit the flexible tube 4 is connected to each input and output.

At the base plate of the mould are located connection bases 18 for the cooling circuits from which extend connecting hoses (not shown) to the general circuit of the mould, one for connecting the inlet 5 and another for connecting the output. The bases 18 are fixed to the base plate of the mould 19 by means of a screw 20, and they house smaller diameter ducts 15 and act as movement axis of said larger diameter ducts 14 described above.

To ensure the movement of each cooling circuit in the time of starting the ejection movement, there is provided a supporting ring 13 conveniently located on the double-ejection mechanism which acts as a pusher of said larger diameter duct 14 throughout its stroke, and to return to its starting position after the ejection process is the ejecting plate 11 itself which takes care of it, by housing mechanized in the ejection plate 11.

Although reference has been made to a specific embodiment of the invention, it is apparent for a person skilled in the art that the described demuolding device is susceptible of numerous variations and modifications, and that all the details mentioned can be replaced with other technically equivalent ones, without departing from the scope of protection defined by the attached claims.

## Claims

1. Device for demoulding pieces in a mould, comprising a skid (1) comprising a slider (8) for housing a figure insert (2) for moulding of a negative (10) of the piece to be moulded, said slider being associated with a pushrod (9) that can move said slider (8) to an ejection position of a piece to be moulded pushing at least one ejection plate (11), **characterized in that** said pushrod (9) is placed substantially perpendicular with respect to said at least one ejection plate (11).

2. Device for demoulding pieces according to claim 1, wherein said slider (8) performs a double movement, a vertical movement by the movement of said at least one ejection plate (11), and a transverse movement by an inclined guide (3a) of a sliding base (3).

3. Device for demoulding pieces according to claim 1, comprising a single set of ejection plates (11) provided with a stroke limiter (12) of said set of ejection plates.

4. Device for demoulding pieces according to claim 3, wherein said limiter (12) comprises an associated support ring (13).

5. Device for demoulding pieces according to claim 1, comprising means (4) for cooling said figure insert (2).

6. Device for demoulding pieces according to claim 5, wherein said means for cooling said insert (2) comprises at least one tube (4) for a cooling fluid, which extends from an inlet (5) of cooling fluid and said insert (2).

7. Device for demoulding pieces according to claim 5, wherein said cooling means comprises a connection (7) in said insert (2) for connecting said tube (4).

8. Device for demoulding pieces according to claim 6, wherein said tube (4) is flexible.

9. Device for demoulding pieces according to claim 6, wherein said cooling means also comprises two ducts of different diameters (14, 15) sliding one inside the other, said tube (4) being housed inside the smaller diameter duct (15).
